# EUROPEAN PATENT APPLICATION

(11) **EP 4 205 529 A1**
(43) Date of publication of application: **05.07.2023**
(21) Application number: 22186103.2
(22) Date of filing: 20.07.2022
(51) Int. Cl.: A01D 41/14, A01D 61/00, A01D 41/127

(54) **FEED RATE SENSOR FOR A COMBINE HARVESTER**

(30) Priority: 04.01.2022 EP 22150134
(71) Applicant: CNH Industrial Belgium N.V., 8210 Zedelgem (BE)
(72) Inventor: LENAERTS, Bart, 3001 Heverlee (BE); MISSOTTEN, Bart M.A., 3020 Herent (BE); TALLIR, Frederik, 8600 Esen (BE); VAN SOOM, Bertram, 3010 Kessel-Lo (BE); YDE, Luc, 9982 Sint-Jan-in-Eremo (BE); DERUYTER, Lucas, 8830 Gits (BE)
(74) Representative: CNH Industrial IP Department

(57) **Abstract**

A combine harvester (10) is provided comprising a header (18) for cutting plants to be harvested by the combine harvester (10), a feeder housing (201, 202), and a revolving conveyor (210) that is housed within the feeder housing. The revolving conveyor (210) comprises conveying elements (211, 213) for conveying the cut plants through a conveying channel (215) between the revolving conveyor (210) and a bottom (202) of the feeder housing. At least a first feed rate sensor (220) is positioned above the conveying channel (215) and configured to send signals to and receive signals from the conveying channel (215). A controller is operatively coupled to the first feed rate sensor (220) and configured to repeatedly determine a distance between the first feed rate sensor (220) and the revolving conveyor (210) based on the signals received by the first feed rate sensor (220).

## Description

### TECHNICAL FIELD

The present invention relates to combine harvesters. In particular, this invention relates to a combine harvester with a header, a feeder, at least one feed rate sensor and means for determining the feed rate of cut plants within the feeder based on measurements by the feed rate sensor.

### BACKGROUND

Combine harvesters, also simply called combines, are complex driving agricultural machinery comprising a variety of mechanical tools for reaping grain crops from a field, feeding the reaped crop into the crop processing core of the combine, threshing the grain, and separating the threshed grain from the straw and other non-grain material. The feeder typically comprises an inclined conveyor which receives cut crops from the header and delivers them to the threshing and separating section downstream of the feeder. The conveyor may comprise slats mounted to one or more revolving chains to engage with the crops as they are received within the feeder and to convey the harvested plants through the feeder towards the threshing and separating section.

Variations in crop density in the field and changes in the driving speed of the combine harvester may cause variations over time in the amount of crops that are conveyed through the feeder. The header of the combine harvester typically has a significantly larger width than the feeder. As a result, crop density variations and the partly stochastic mechanics of the crop during its lateral transport to the feeder inlet may lead to an uneven distribution of cut crops over the width of the inclined conveyor.

In denser areas of the field, larger volumes of incoming crop cause a larger deflection of the chains and slats of the conveyor. These increased crop volumes may thus cause higher torques and strain on different parts of the feeder as well as on other crop handling parts further downstream in the combine harvester. This increased strain may lead to increased downtime and maintenance costs, and is therefore preferably avoided when possible.

Often combine harvesters comprise feed rate sensors for determining the rate at which the cut crops are transported through the feeder. The feed rate measurements may be used as input for the adjustment of operational settings of the harvester. For example, if the combine harvester suddenly encounters a dense area of the field, the feed rate sensor may detect the increased volumes of crop in the feeder and a driver or automated control system may then adjust the driving speed of the combine harvester to return to a lower, more manageable feed rate.

The European patent application published as EP 3 527 059 A1 discloses a combine harvester, with a device for measuring a layer height of the harvested plant material that is transported by the inclined conveyor. The layer height measuring device comprises multiple inductive sensors that arranged below the floor or on the side walls of the feeder, and which are distributed over the length and the width of the inclined conveyor. While these inductive sensors do allow for contactless monitoring of the volume of crop conveyed through the inclined conveyor, the resulting feed rate measurements may not always be as reliable as desired. Another disadvantage of the measuring device as used in EP 3 527 059 A1 is that transparent windows need to be installed in the metal feeder housing in order to allow the inductive sensors to measure the layer height.

For optimal monitoring and control of the feed rate of a modern combine harvester, there remains a desire for alternative and more accurate feed rate monitoring solutions. It is an aim of the present invention to provide such alternatives.

### SUMMARY OF THE INVENTION

According to an aspect of the invention there is provided a combine harvester comprising a header for cutting plants to be harvested by the combine harvester, a feeder housing, and a revolving conveyor that is housed within the feeder housing. The revolving conveyor comprises conveying elements for conveying the cut plants through a conveying channel between the revolving conveyor and a bottom of the feeder housing. At least a first feed rate sensor is positioned above the conveying channel and configured to send signals to and receive signals from the conveying channel. The feed rate sensor can comprise one sensor device that can both send and receive signals, either simultaneously, either alternating, or the feed rate sensor can comprise a first sensor device that can send signals and a second sensor device that can receive signals. Preferably, the first feed rate sensor is configured to send signals substantially perpendicular to the conveying channel and/or bottom of the feeder housing. A controller is operatively coupled to the first feed rate sensor and configured to repeatedly determine a distance between the first feed rate sensor and the revolving conveyor based on the signals received by the first feed rate sensor.

Optionally, the controller is further configured to determine a crop mass in the conveying channel based on the attenuation of signals sent by the first feed rate sensor, reflected by the bottom of the feeder housing and received again by the first feed rate sensor. The attenuation is typically proportional to the mass of crop present between the first feed rate sensor and the bottom of the feeder housing. The attenuation can be modelled with well-known physics laws and/or calibration experiments whereby a known mass of crop is placed in the conveying channel, so that based on a measured attenuation the mass of crop present in the conveying channel can be estimated.

One of the advantages of the feed rate sensor according to the invention is that its unique positioning above the conveying channel allows it to send signals to and receive signals from the conveying elements on top of that channel without experiencing any interference of the crop material that is pulled through the feeder housing. This enables the controller to determine the distance between the feed rate sensor and the revolving conveyor more accurately and reliably than before.

Optionally, the controller is further configured to determine a feed rate of the combine harvester based on the repeatedly determined distance between the feed rate sensor and the revolving conveyor. The thus calculated feed rate may be shown to the combine operator or another user on a display, or may be used as input data for automatic and semi-automatic control algorithms intended to optimise one or more operational settings of the harvester. When no actual feed rates are calculated, the measured distance to the revolving conveyor itself may be used as input for such control algorithms.

When both the feed rate and the crop mass are determined, also the crop density in the conveying channel can be calculated and be used as information for the combine operator and/or for combine harvester control algorithms.

Preferably, the revolving conveyor is arranged to revolve around the at least one feed rate sensor. In such an arrangement, the feed rate sensor is effectively positioned inside the revolving conveyor loop. This brings the advantage that the signals traveling between the feed rate sensor and the conveying elements on top of the conveying channel (i.e., at the bottom of the revolving conveyor loop) do not have to pass the conveying elements returning to the front end of the feeder at the upper part of the revolving conveyor loop. As a result, the feed rate measurements are not disturbed by the returning conveying elements, as they would have been if the feed rate sensor were mounted at, for example, the ceiling of the feeder housing, above the revolving conveyor.

The conveying elements may comprise conveying slats, arranged to engage and convey the cut plants, and the controller may be configured to repeatedly determine a distance between the first feed rate sensor and the conveying slats. The conveying slats are typically made of steel, aluminium or other metals that effectively reflect the sensor signals and thereby allow the distance between the feed rate sensor and the revolving conveyor to be determined accurately and reliably. The slats typically stretch the full width of the revolving conveyor, either on their own or collectively, which provides for a lot of flexibility in the exact positioning of the feed rate sensor.

Typically, the revolving conveyor further comprises a rotating conveyor chain, the conveyor slats being mounted to the conveyor chain for rotating therewith. The controller may be configured to repeatedly determine a distance between the first feed rate sensor and the conveyor chain. The conveyor slats pass the feed rate sensor frequently but intermittently. An advantage of measuring the distance to the conveyor chain instead of, or in addition to, the distance to the conveyor slats is that the chains span the full length of the revolving conveyor and allow for a continuous monitoring of said distance.

Preferably, the combine harvester further comprises at least a second feed rate sensor, positioned above the conveying channel and configured to send signals to and receive signals from the conveying channel. The controller then being operatively coupled to the second feed rate sensor and configured to repeatedly determine a distance between the second feed rate sensor and the revolving conveyor. Adding a second feed rate sensor does not just increase the accuracy and reliability of the measurements, but also allows for measuring the distance to the revolving conveyor at multiple locations.

When monitoring the distance to the revolving conveyor at different locations, not just the feed rate, but also the dynamics of the crop conveyed through the conveying channel can be monitored. In a preferred embodiment, for example, the first feed rate sensor is positioned above a lefthand portion of the conveying channel and the second feed rate sensor is positioned above a righthand portion of the conveying channel and wherein the controller is configured to determine a left-right feeding balance based on the determined distances between the respective feed rate sensors and the revolving conveyor. When it is determined that more crop is taken in at one side of the feeder, the subsequent threshing, separating, and/or cleaning stages of the combine harvester may be configured to prepare for and adapt to the expected side to side difference in the amount of crop that is to be processed soon. Furthermore, the header operation may be adjusted to reduce the left-right imbalance, for example by changing the lateral inclination of the header or by independently adjusting the drive speed of a draper/auger on the left and/or right side of the header.

More than two feed rate sensors may be used to provide an even more detailed view on the lateral variation of the amount of crop that is being pulled through the conveying channel. In addition to observing pure left-right imbalances, this may allow for the detection of a valley-shaped distribution, with more crop being pulled in at the sides of the feeder than in the centre, or a mountain-shaped distribution with more crop in the centre. Such valley-shaped or mountain-shaped distributions may be avoided by appropriately adjusting the drive speeds of the left and right drapers of a draper header.

The feed rate sensor may, for example, comprise an electromagnetic wave sensor, a radar sensor, a Lidar sensor, an optical distance sensor or an ultrasound sensor. Alternatively, inductive sensors may be used for detecting the proximity of the metal parts of the revolving conveyor.

According to a further aspect of the invention, a method is provided for determining a feed rate of a combine harvester. The method comprises steps of:
repeatedly sending signals to and receiving signals from the conveying channel,
repeatedly determining a distance between the first feed rate sensor and the revolving conveyor based on the signals received by the first feed rate sensor, and
determining the feed rate of the combine harvester based on the repeatedly determined distance between the feed rate sensor and the revolving conveyor.

Preferably, the method further comprises a step of adapting a configuration of the header of the combine harvester, or of a functional unit of the combine harvester, downstream the feeder housing, in dependence of the determined feed rate. For example, the threshing rotor speed and/or gap between concave and threshing rotor can be adjusted to achieve better threshing in dependence of the determined feed rate which might vary over time and/or over the width of the feeder.

If the combine harvester comprises at least a second feed rate sensor, positioned above the conveying channel and configured to send signals to and receive signals from the conveying channel, the method may further comprise the steps of:
repeatedly determining a distance between the second feed rate sensor and the revolving conveyor based on the signals received by the second feed rate sensor, and
adapting a configuration of the header of the combine harvester, or of a functional unit of the combine harvester, downstream the feeder housing, in dependence of the distance between the first feed rate sensor and the revolving conveyor and the distance between the second feed rate sensor and the revolving conveyor.

This allows the harvester operation to be adjusted to left-right imbalances and other lateral variations in the amount of crop that is being pulled through the conveying channel of the feeder.

### BRIEF DESCRIPTION OF THE DRAWINGS

Embodiments of the invention will now be described by way of example with reference to the accompanying drawings, in which:
Figure 1 schematically shows a combine harvester in which the invention may be implemented.
Figure 2 schematically shows a cross section of a portion of the feeder of the combine harvester of Figure 1.
Figure 3 shows a perspective view of some relevant parts of the feeder of the combine harvester of Figure 1.

### DETAILED DESCRIPTION

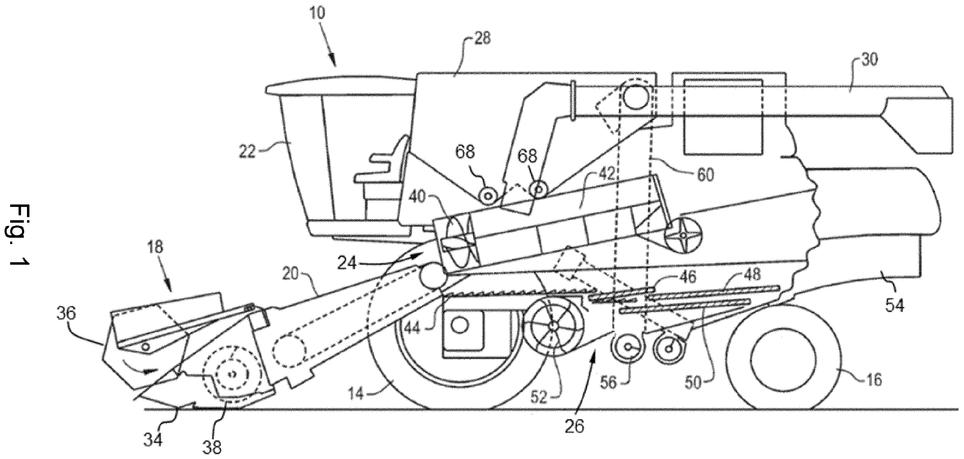

Figure 1 schematically shows an agricultural harvester in the form of a combine harvester 10. The combine harvester 10 generally includes front and rear round engaging wheels 14, 16, a header 18, a feeder 20, an operator cabin 22, a threshing and separation system 24, a cleaning system 26, a grain tank 28 and an unloading tube 30.

A header 18 is mounted to the front of the combine harvester 10 and includes a cutter bar 34 for severing crops from a field during forward motion of the combine. A rotatable reel 36 feeds the crop into the header 18, and a double auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10. Grain and smaller elements of MOG (small MOG henceforth), such as chaff, dust and straw are small enough to pass through the perforations in the threshing concave 42 and are then discharged from the threshing and separation system 24.

Grain and small MOG that has successfully passed the threshing and separation system 24 falls onto a preparation pan 44 and is conveyed towards the cleaning system 26. The cleaning system 26 comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

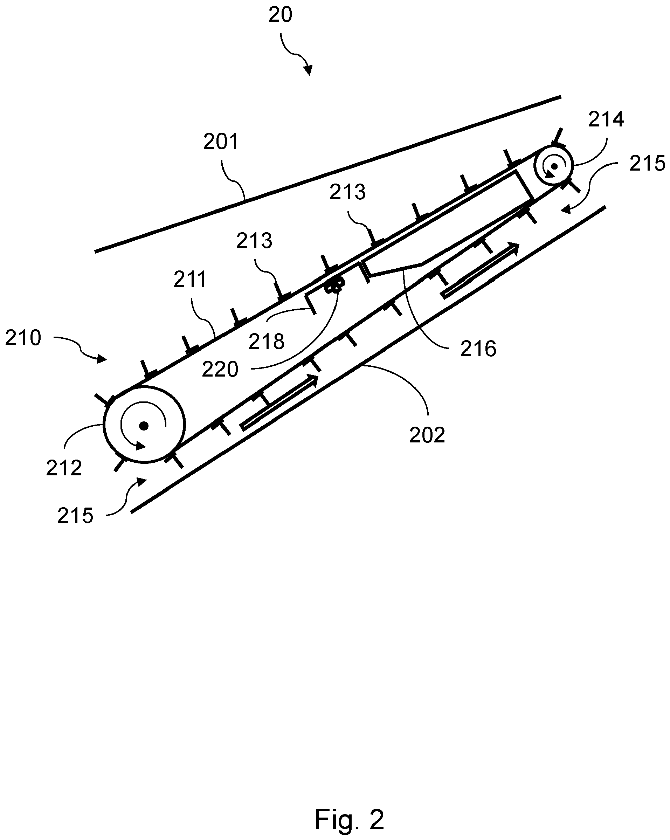

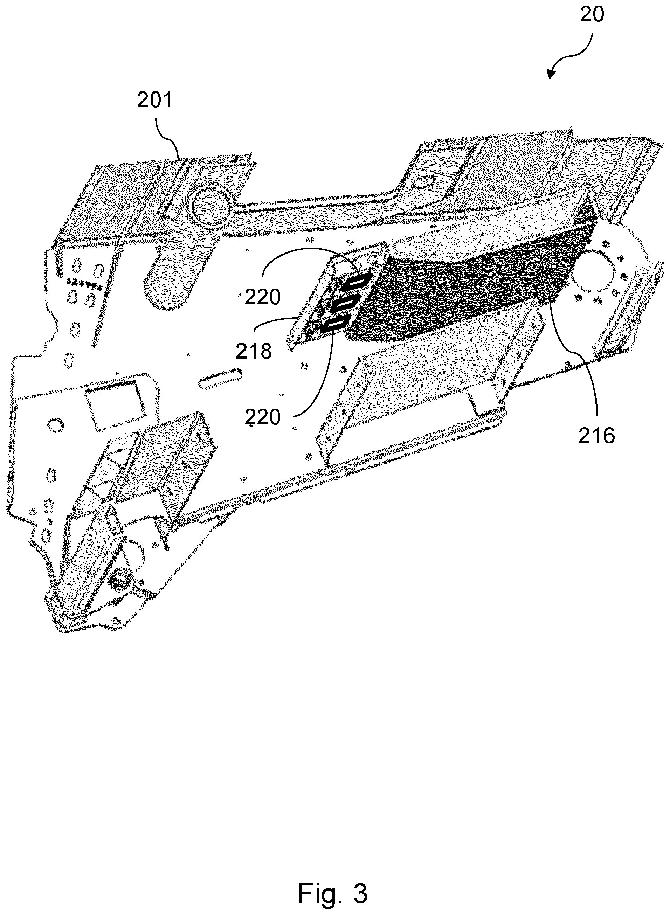

Figure 2 schematically shows a cross section of a portion of the feeder 20 of the combine harvester 10 of Figure 1. Figure 3 shows a perspective view of some relevant parts of the feeder 20 of the combine harvester 10 of Figure 1. The feeder 20 comprises a feeder housing with a feeder roof 201, a feeder floor 202 and feeder side walls for together housing the components of the feeder 20. The components include a revolving conveyor 210 which conveys the cut plants to the threshing and separation system 24 downstream of the feeder 20. A front roller 212 and a rear roller 214 are mounted to the feeder side walls. At least one of the two rollers 212, 214 is mechanically, electrically, or hydraulically driven to cause the revolving conveyor 210 to rotate around the rollers 212, 214.

The revolving conveyor 210 of this embodiment comprises two or more rotating chain loops 211 that engage with and are driven by cooperating sprockets on the front and rear rollers 212, 214. In alternative embodiments, the chain loops 211 may, for example, be replaced by belt loops. Conveyor slats 213 are mounted to the chain loops 211 in order to rotate therewith. The conveyor slats 213 are aligned substantially in parallel with the rollers 212, 214 and configured to engage with the cut plants received from the header 18. A conveying channel 215 is formed between the revolving conveyor 210 and the feeder floor 202. Preferably, each conveyor slat 213 is mounted to at least two of the chain loops 211 to ensure that the slats 213 remain properly aligned while pulling the received plant material over the feeder floor 202, towards the feeder outlet at the top of the feeder 20. Typically, the revolving conveyor 210 comprises three parallel chain loops 211 and the conveyor slats 213 are mounted to two chain loops 211 each, such that they span either the left or the right half of the full width of the conveying channel 215.

The length of and tension on the chain loops 211 is typically such that it provides some room for the lower, ascending half of the loop to move to and from the feeder floor 202. Depending on the volume of the harvested crop in the conveying channel 215, directly underneath the chain loop 211, the chain loop 211 may be pushed up or fall down a bit. As varying volumes of crop are received within the conveying channel 215, the slats 213 that are mounted to the chain loops 211 and engage with the crop are pushed up and fall down depending on the crop uptake. In this embodiment, a hollow chain guide 216 extends between the feeder side walls and prevents the chain loops 211 and conveyor slats 213 from excessively deflecting at the end of the conveying channel 215, where the crop approached the rear roller 214. As can be seen in this cross section, the chain guide 216 may include a sloping front surface to ensure a smooth crop flow and conveyor trajectory, even when the crop volumes that need to be dealt with are large.

The movement of the slats 213 and chain loops 211 caused by increasing and decreasing amounts of crop moving through the conveying channel 215 can be used for monitoring the feed rate of the combine harvester 10. The further away the slats 213 are from the feeder floor 202, the larger the volume of cut plants that is moving through the respective part of the conveying channel 215. According to the invention, one or more feed rate sensors 220 are positioned above the conveying channel 215 and configured to send signals to and receive signals from the conveyor elements 211, 213 underneath. The feed rate sensors 220 may, for example, comprise an electromagnetic wave sensor, a radar sensor, a Lidar sensor, an optical distance sensor or an ultrasound sensor. All such sensors send out wave signals and are configured to detect reflections of said signals coming from the revolving conveyor 210 underneath the sensors 220. Alternatively, inductive sensors may be used for detecting the proximity of the metal parts of the revolving conveyor 210. The preferred type of sensing technique may depend on the material used for the conveyor elements 211, 213, the cost and availability of the sensors, or the ease of implementation.

As can be seen in Figure 3, multiple feed rate sensors 220 may be distributed over the width of the conveying channel 215 to make it possible to detect differences in feed rates along the width of the feeder 20. In other embodiments, multiple feed rate sensors 220 may be placed at different positions along the length of the feeder 20 too. When monitoring the distance to the revolving conveyor 210 at different locations, not just the feed rate, but also the dynamics of the crop conveyed through the conveying channel 215 can be monitored. When, for example, a first feed rate sensor 220 is positioned above a lefthand portion of the conveying channel 215 and a second feed rate sensor 220 is positioned above a righthand portion of the conveying channel 215. Signals from these two feed rate sensors 220 may then be used to determine a left-right feeding balance based on the determined distances between the respective feed rate sensors 220 and the revolving conveyor 210. When it is determined that more crop is taken in at one side of the feeder 20, the subsequent threshing, separating, and/or cleaning stages of the combine harvester 10 may be configured to prepare for and adapt to the expected side to side difference in the amount of crop that is to be processed soon. Furthermore, the header operation may be adjusted to reduce the left-right imbalance, for example by changing the lateral inclination of the header 18 or by independently adjusting the drive speed of a draper (or auger) on the left and right side of the header 18.

More than two feed rate sensors 220 may be used to provide an even more detailed view on the lateral variation of the amount of crop that is being pulled through the conveying channel 215. In addition to observing pure left-right imbalances, this may allow for the detection of a valley-shaped distribution, with more crop being pulled in at the sides of the feeder than in the centre, or a mountain-shaped distribution with more crop in the centre. Such valley-shaped or mountain-shaped distributions may be avoided by appropriately adjusting the drive speeds of the left and right drapers (or augers) of a draper (or auger) header 18.

A controller (not shown) is operatively coupled to the one or more feed rate sensors 220 and configured to repeatedly determine a distance between the feed rate sensors 220 and the revolving conveyor 210 based on the signals received by those sensor 220. The controller may be located in the feeder 20, in the driver cabin 22, or elsewhere in the combine harvester 10.

One of the advantages of the feed rate sensors 220 according to the invention is that their unique positioning above the conveying channel 215 allows them to send signals to and receive signals from the chain loops 211 and conveyor slats 213 on top of that channel 215 without experiencing any interference of the crop material that is pulled through the feeder housing. This enables the controller to determine the distance between the feed rate sensors 220 and the revolving conveyor 210 more accurately and reliably than before. The controller is further configured to determine a feed rate of the combine harvester 10 based on the repeatedly determined distances between the feed rate sensors 220 and the revolving conveyor 210. The thus calculated feed rate may be shown to the user on a display, or may be used as input data for automatic and semi-automatic control algorithms intended to optimise one or more operational settings of the harvester 10. Alternatively, no actual feed rates are calculated, and the measured distance to the revolving conveyor 210 itself is used as input for such control algorithms.

Preferably, as in the embodiment shown in Figures 2 and 3, the revolving conveyor 210 is arranged to revolve around the at least one feed rate sensor 220. In such an arrangement, the feed rate sensor 220 is effectively positioned inside the revolving conveyor loop. This brings the advantage that the signals traveling between the feed rate sensor 220 and the conveying elements 211, 213 on top of the conveying channel 215 (i.e., at the bottom of the revolving conveyor loop) do not have to pass the conveying elements 211, 213 returning to the front end of the feeder 20 at the upper part of the revolving conveyor loop. As a result, the feed rate measurements are not disturbed by the returning chain loops 211 and conveyor slats 213, as they would have been if the feed rate sensors 220 were mounted at, for example, the ceiling 201 of the feeder housing, above the revolving conveyor 210. Mounting the feed rate sensors 220 within the conveyor loop may, for example, be done by positioning them inside one or more U-beams 218 that may be mounted to a front end of the chain guide 216. The U-beam 218 provides suitable surfaces for mounting the sensors 220 to the U-beam 218 and the U-beam 218 to the chain guide 216 or some other structural part of the feeder 20. Furthermore the U-beam 218 may shield the feed rate sensors 220 against contact with the conveyor elements 211, 213, or the crop.

The conveying slats 213 are typically made of steel, aluminium or other metals that effectively reflect the sensor signals and thereby allow the distance between the feed rate sensors 220 and the revolving conveyor 210 to be determined accurately and reliably. The slats 213 typically stretch the full width of the revolving conveyor, either on their own or collectively, which provides for a lot of flexibility in the exact positioning of the feed rate sensors 220. Instead of or in addition to measuring the distance to the conveyor slats 213, controller may be configured to determine a distance between the feed rate sensors 220 and the conveyor chain 211. The conveyor slats 213 pass the feed rate sensors 220 frequently but intermittently. An advantage of measuring the distance to the conveyor chain 211 instead of, or in addition to, the distance to the conveyor slats 213 is that the chains 211 span the full length of the revolving conveyor 210 and allow for a continuous monitoring of said distance.

## Claims

1. A combine harvester (10) comprising:
a header (18) for cutting plants to be harvested by the combine harvester (10),
a feeder housing (201, 202),
a revolving conveyor (210) that is housed within the feeder housing (201, 202), the revolving conveyor (210) having conveying elements (211, 213) for conveying the cut plants through a conveying channel (215) between the revolving conveyor (210) and a bottom (202) of the feeder housing,
at least a first feed rate sensor (220), positioned above the conveying channel (215) and configured to send signals to and receive signals from the conveying channel (215), and
a controller, operatively coupled to the first feed rate sensor (220) and configured to repeatedly determine a distance between the first feed rate sensor (220) and the revolving conveyor (210) based on the signals received by the first feed rate sensor (220).

2. A combine harvester (10) as claimed in claim 1, wherein the controller is further configured to determine a crop mass in the conveying channel (215) based on the attenuation of signals sent by the first feed rate sensor (220), reflected by the bottom (202) of the feeder housing (201,202) and received again by the first feed rate sensor (220).

3. A combine harvester (10) as claimed in claim 1 or 2, wherein the controller is further configured to determine a feed rate of the combine harvester (10) based on the repeatedly determined distance between the feed rate sensor (220) and the revolving conveyor (210).

4. A combine harvester (10) as claimed in any preceding claim, wherein the revolving conveyor (210) is arranged to revolve around the at least one feed rate sensor (220).

5. A combine harvester (10) as claimed in any preceding claim, wherein the conveying elements comprise conveying slats (213), arranged to engage and convey the cut plants, and wherein the controller is configured to repeatedly determine a distance between the first feed rate sensor (220) and the conveying slats (213).

6. A combine harvester (10) as claimed in claim 5, wherein the revolving conveyor (210) further comprises a rotating conveyor chain (211), the conveyor slats (213) being mounted to the conveyor chain (211) for rotating therewith, and wherein the controller is further configured to repeatedly determine a distance between the first feed rate sensor (220) and the conveyor chain (211).

7. A combine harvester (10) as claimed in any preceding claim, further comprising at least a second feed rate sensor (220), positioned above the conveying channel (215) and configured to send signals to and receive signals from the conveying channel (215), the controller being operatively coupled to the second feed rate sensor (220) and configured to repeatedly determine a distance between the second feed rate sensor (220) and the revolving conveyor (210).

8. A combine harvester (10) as claimed in claim 7, wherein the first feed rate sensor (220) is positioned above a lefthand portion of the conveying channel (215) and the second feed rate sensor (220) is positioned above a righthand portion of the conveying channel (215) and wherein the controller is configured to determine a left-right feeding balance based on the determined distances between the respective feed rate sensors (22) and the revolving conveyor (210).

9. A combine harvester (10) as claimed in any preceding claim, wherein the feed rate sensor (220) comprises an electromagnetic wave sensor.

10. A combine harvester (10) as claimed in any of claims 1-8, wherein the feed rate sensor (220) comprises a radar sensor.

11. A combine harvester (10) as claimed in any of claims 1-8, wherein the feed rate sensor (220) comprises a Lidar or an optical distance sensor.

12. A combine harvester (10) as claimed in any of claims 1-8, wherein the feed rate sensor (220) comprises an ultrasound sensor.

13. A method of determining a feed rate of a combine harvester (10) according to any of the preceding claims, the method comprising the steps of:
repeatedly sending signals to and receiving signals from the conveying channel (215),
repeatedly determining a distance between the first feed rate sensor (220) and the revolving conveyor (210) based on the signals received by the first feed rate sensor (220), and
determining the feed rate of the combine harvester (10) based on the repeatedly determined distance between the feed rate sensor (220) and the revolving conveyor (215).

14. A method according to claim 13, further comprising a step of adapting a configuration of the header (18) of the combine harvester (10), or of a functional unit of the combine harvester (10), downstream the feeder housing (201, 202), in dependence of the determined feed rate.

15. A method according to claim 13 or 14, wherein the combine harvester (10) comprises at least a second feed rate sensor (220), positioned above the conveying channel (215) and configured to send signals to and receive signals from the conveying channel (215), the method further comprising the steps of:
repeatedly determining a distance between the second feed rate sensor (220) and the revolving conveyor (215) based on the signals received by the second feed rate sensor (220), and
adapting a configuration of the header (18) of the combine harvester (10), or of a functional unit of the combine harvester (10), downstream the feeder housing (201, 202), in dependence of the distance between the first feed rate sensor (220) and the revolving conveyor (215) and the distance between the second feed rate sensor (220) and the revolving conveyor (215).
